# EUROPEAN PATENT SPECIFICATION

(11) **EP 2 490 352 B1**
(45) Date of publication and mention of the grant of the patent: **17.10.2018**
(21) Application number: 10788981.8
(22) Date of filing: 25.06.2010
(51) Int. Cl.: H04B 10/50, H04B 10/556

(54) **APPARATUS AND METHOD FOR CONTROL THE DRIVING AMPLITUDE OF DIFFERENTIAL QUADRATURE PHASE SHIFT KEYING TRANSMITTER**
VORRICHTUNG UND VERFAHREN ZUR STEUERUNG DER TREIBERAMPLITUDE EINES DIFFERENZIALQUADRATUR-PHASENUMTASTUNGSSENDER
DISPOSITIF ET PROCÉDÉ DE COMMANDE D'AMPLITUDE DE PILOTAGE D'UN ÉMETTEUR À MODULATION DIFFÉRENTIELLE PAR DÉPLACEMENT DE PHASE EN QUADRATURE

(30) Priority: 16.10.2009 CN 200910178323
(43) Date of publication of application: 22.08.2012
(73) Proprietor: ZTE Corporation, Shenzhen, Guangdong 518057 (CN)
(72) Inventor: CUI, Ping, Shenzhen Guangdong 518057 (CN); ZHU, Xiaoyu, Shenzhen Guangdong 518057 (CN)
(74) Representative: HGF Limited
(86) International application number: PCT/CN2010/074513
(87) International publication number: WO 2010/145585

(56) References cited:
- EP-A1- 1 286 482
- WO-A2-2007/104022
- CN-A- 1 972 161
- CN-A- 101 043 269
- CN-A- 101 453 271
- CN-A- 101 674 138
- CN-A- 101 674 138
- US-A1- 2004 247 225
- US-A1- 2007 019 968

## Description

### Technical Field

The present invention relates to the communications equipment, and more particularly, to an apparatus and a method for controlling driving amplitude of a differential quadrature phase shift keying transmitter.

### Background of the Related Art

A lot of new modulation techniques, such as DPSK (Differential Phase Shift Keying), DQPSK (Differential Quadrature Phase Shift Keying), and so on, are applied in the optical communication, and the DQPSK coding occupies an important position in the 40G optical communication system because it can reduce the requirements on rate, dispersion and PMD (polarization mode dispersion) of electrical devices. When a DQPSK transmitter modulates to generate a NRZ-DQPSK (Non-Return-to-Zero- DQPSK) signal by using an MZM (Mach-Zender Modulator), the effect due to the change of the driving amplitude is much bigger than the NRZ-DPSK.

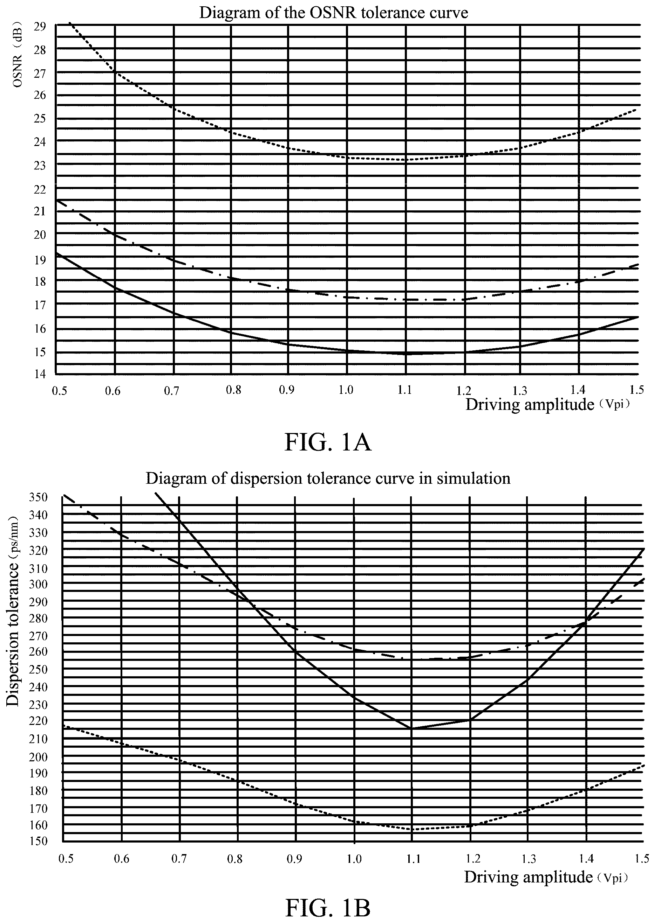

FIG. 1 is a schematic diagram of influence of modulating driving amplitude, wherein, FIG. 1A is a schematic diagram of an OSNR (Optical Signal Noise Ratio) tolerance curve. In FIG. 1A, ― denotes the OSNR tolerance curve when the optical filter bandwidth is 37.5GHz (bit error rate (BER)=1e-4); - · - · denotes the OSNR tolerance curve when the optical filter bandwidth is 75GHz (BER=1e-4); and ---------- denotes the OSNR tolerance curve when the optical filter bandwidth is 75GHz (BER=1e-12). FIG. 1B is a schematic diagram of a dispersion tolerance curve in simulation, and in FIG. 1B, ― denotes the dispersion tolerance curve when the optical filter bandwidth is 37.5GHz (BER=1e-4); - · - · denotes the dispersion tolerance curve when the optical filter bandwidth is 75GHz (BER=1e-4); and ---------- denotes the dispersion tolerance curve when the optical filter bandwidth is 75GHz (BER=1e-12). In different optical filter bandwidths (37.5GHz and 75GHz), the curves of the OSNR tolerance and the back to back 2dB OSNR cost dispersion tolerance following the change of modulating the driving amplitude are shown in FIG. 1.

It can be seen from FIG. 1 that, when the driving amplitude is less than Vpi, in the two optical filter bandwidths (37.5GHz and 75GHz), with the decreasing of the driving amplitude, both the OSNR tolerance and the 2dB OSNR cost dispersion tolerance increase rapidly, and when the driving amplitude is reduced to 0.5Vpi, compared with the Vpi, it brings that the OSNR cost is more than 4dB, which is much larger than the case of NRZ-DPSK. When the driving amplitude is larger than Vpi, in the two optical filter bandwidths (37.5GHz and 75GHz), with the increasing of the driving amplitude, the OSNR tolerance and the 2dB OSNR cost dispersion tolerance remain stable at first, and then increase rapidly, but the increasing rate is slower than that at the decreasing of the driving amplitude; and when the driving amplitude increases to 1.5Vpi, compared with the Vpi, it brings that the OSNR cost is almost 2dB, which is much larger than the case of NRZ-DPSK.

The change of the driving amplitude has relatively large influence on the NRZ-DQPSK performance, and when the driving amplitude is 1.1Vpi, although the dispersion tolerance is minimum, its OSNR performance is the best. For the NRZ-DQPSK system with rate of 40Gb/s, a superior OSNR performance is more concerned, thus the best driving amplitude is taken as 1.1Vpi. Therefore, the stability of the driving amplitude has a large influence on the OSNR performance of the NRZ-DQPSK transmitter, and the driving amplitude needs to be controlled strictly.

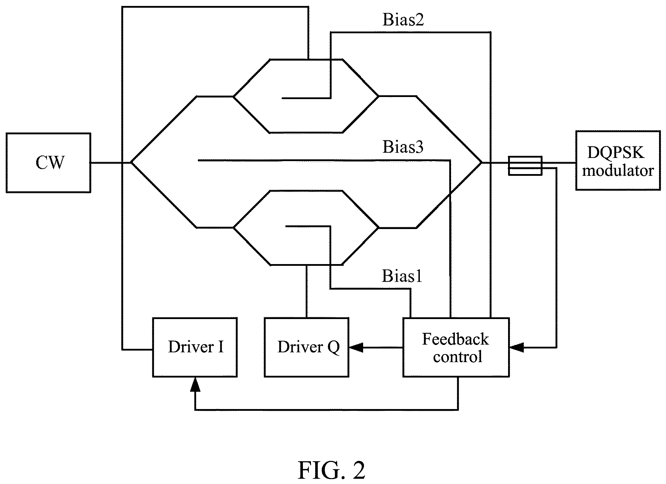

FIG. 2 is a block diagram of a structure of a feedback control apparatus of a DQPSK transmitter. In FIG. 2, the CW denotes the continuous spectrum light source of the unmodulated signal, the driver I and the driver Q denote drivers of two upper and lower Mach-Zender modulators of the DQPSK modulator, the Bias 1, Bias 2 and Bias 3 are the bias point 1, the bias point 2 and the bias point 3. As shown in FIG. 2, the light emitted from the CW is modulated by the DQPSK modulator to generate a modulated optical signal to output, wherein, a part of the modulated optical signal is used to control the states of the modulator, the driver I and the driver Q.

The disadvantage of the related art is that: since the DQPSK transmitter needs to control the three bias points of the modulator, the control circuit is relatively complicated already, then, if the driving amplitude is controlled by using the conventional method in which the pilot signal is added and by the time division multiplexing mode, the control circuit is very large, and adding the pilot signal might introduce a certain amount of OSNR cost.

The document US2007/019968A1 discloses a method for adequately controlling the DC bias of each of the optical modulating sections of an optical modulator even while the optical modulator is operating in normal mode and even with a simple structure.

The document US2004/247225A1 discloses optical modulators with reduced temperature dependence on bias control. A set of bias electrodes is arranged relative to a set of RF electrodes in a manner which results in the operating point of the device remaining relatively constant as a function of temperature.

The document WO2007/104022A2 discloses a method, which includes computer program products, implementing and using techniques for controlling three or more nested modulators in an optical signal application.

### Content of the Invention

The technical problem to be solved in the present invention is to provide an apparatus according to claim 1 and a method according to claim 7 for controlling driving amplitude of a differential quadrature phase shift keying transmitter, so as to simplify the complexity of the control circuit of the DQPSK transmitter. Further improvements and embodiments are provided in the dependent claims.

Also provided is an apparatus for controlling driving amplitude of a DQPSK transmitter, which comprises: a first bias point, a second bias point, a third bias point, a driver I, a driver Q, and a DQPSK modulator for modulating an optical signal emitted by the CW, the apparatus also comprises:
a modulator feedback control unit, which is connected with the first bias point, the second bias point and the third bias point, and is configured to control the first bias point, the second bias point and the third bias point according to a part of the optical signal modulated by the DQPSK modulator;
a driver I feedback control unit, which is connected with the driver I and is configured to control the driving amplitude of the driver I according to temperature change of the driver I; and
a driver Q feedback control unit, which is connected with the driver Q and is configured to control the driving amplitude of the driver Q according to temperature change of the driver Q.

Preferably, the driver I feedback control unit comprises:
a first temperature sensor, which is connected with the driver I and is configured to detect the temperature change of the driver I; and
a first direct compensation module, which is configured to compensate in light of a temperature compensation curve and according to the temperature change of the driver I, and after obtaining an offset of a drain voltage of a third-level metal oxide semiconductor field effect transistor (MOSFET) of the driver I, feed back the offset to a switching power supply converter connected with the driver I, so as to control change of the drain voltage of the third-level MOSFET of the driver I.

Preferably, the driver Q feedback control unit comprises:
a second temperature sensor, which is connected with the driver Q and is configured to detect the temperature change of the driver Q; and
a second direct compensation module, which is configured to compensate in light of a temperature compensation curve and according to the temperature change of the driver Q, and after obtaining an offset of a drain voltage of a third-level MOSFET of the driver Q, feed back the offset to a switching power supply converter connected with the driver Q, so as to control change of the drain voltage of the third-level MOSFET of the driver Q.

Preferably, the temperature compensation curve is obtained according to the driving amplitude of an output signal of the driver and the drain voltage of the MOSFET of the driver.

Preferably, the driver I feedback control unit comprises:
a first current monitoring module, which is connected with a drain voltage of a third-level MOSFET of the driver I and is configured to monitor current change of the drain voltage of the third-level MOSFET of the driver I; and
a first indirect compensation module, which is configured to control voltage change of a gate voltage of the third-level MOSFET according to the current change of the drain voltage of the third-level MOSFET of the driver I, and control the current change of the drain voltage of the third-level MOSFET by controlling the voltage change of the gate voltage of the third-level MOSFET.

Preferably the driver Q feedback control unit comprises:
a second current monitoring module, which is connected with a drain voltage of a third-level MOSFET of the driver Q and is configured to monitor current change of the drain voltage of the third-level MOSFET of the driver Q; and
a second indirect compensation module, which is configured to control voltage change of a gate voltage of the third-level MOSFET according to the current change of the drain voltage of the third-level MOSFET of the driver Q, and control the current change of the drain voltage of the third-level MOSFET by controlling the voltage change of the gate voltage of the third-level MOSFET.

Also provided is a method for controlling driving amplitude of a DQPSK transmitter, which comprises:
modulating, by a DQPSK modulator, an optical signal emitted from a CW;
connecting a modulator feedback control unit with a first bias point, a second bias point and a third bias point, and controlling, by the modulator feedback control unit, the first bias point, the second bias point and the third bias point according to a part of the optical signal modulated by the DQPSK modulator;
controlling the driving amplitude of a driver I according to temperature change of the driver I;
controlling the driving amplitude of a driver Q according to temperature change of the driver Q.

Preferably, controlling the driving amplitude of the driver I according to the temperature change of the driver I comprises:
detecting the temperature change of the driver I;
compensating in light of a temperature compensation curve and according to the temperature change of the driver I, and after obtaining an offset of a drain voltage of a third-level metal oxide semiconductor field effect transistor (MOSFET) of the driver I, feeding back the offset to a switching power supply converter connected with the driver I, so as to control change of the drain voltage of the third-level MOSFET of the driver I;
and/or,
controlling the driving amplitude of the driver Q according to the temperature change of the driver Q comprises:
   detecting the temperature change of the driver Q;
   compensating in light of a temperature compensation curve and according to the temperature change of the driver Q, and after obtaining an offset of a drain voltage of a third-level MOSFET of the driver Q, feeding back the offset to a switching power supply converter connected with the driver Q, so as to control change of the drain voltage of the third-level MOSFET of the driver Q.

Preferably, the temperature compensation curve is obtained according to the driving amplitude of an output signal of the driver and the drain voltage of the MOSFET of the driver.

Preferably, controlling the driving amplitude of the driver I according to the temperature change of the driver I comprises:
monitoring current change of a drain voltage of a third-level MOSFET of the driver I;
controlling voltage change of a gate voltage of the third-level MOSFET according to the current change of the drain voltage of the third-level MOSFET of the driver I, and controlling the current change of the drain voltage of the third-level MOSFET by controlling the voltage change of the gate voltage of the third-level MOSFET;
and/or,
controlling the driving amplitude of the driver Q according to the temperature change of the driver Q comprises:
   monitoring current change of a drain voltage of a third-level MOSFET of the driver Q;
   controlling voltage change of a gate voltage of the third-level MOSFET according to the current change of the drain voltage of the third-level MOSFET of the driver Q, and controlling the current change of the drain voltage of the third-level MOSFET by controlling the voltage change of the gate voltage of the third-level MOSFET.

The beneficial effects of the present invention are as follows:
in the implementation of the present invention, since the modulator feedback control unit is connected with the first bias point, the second bias point and the third bias point, the first bias point, the second bias point and the third bias point are controlled according to a part of the optical signal modulated by the DQPSK modulator; however, the part of the modulated optical signal is not used to control the states of the driver I of the driver Q any more; meanwhile, the driving amplitudes of the driver I and the driver Q are controlled according to the temperature changes of the driver I and the driver Q, rather than controlled by the modulator feedback control unit, so that the driver amplitude control circuit is separated from the feedback control of the DQPSK modulator, and the driving amplitude of the driver is controlled through the temperature change of the driver. Therefore, compared with the related art, the present invention can simplify the complexity of the control circuit of the DQPSK transmitter. Moreover, there is no need to add the pilot signal on the driving amplitude of the driver, thus no extra OSNR cost is created.

### Brief Description of Drawings

FIG. 1 is a schematic diagram of influence of modulating driving amplitude in the related art, wherein: FIG. 1A is a schematic diagram of an OSNR tolerance curve, and FIG. 1B is a schematic diagram of a dispersion tolerance curve in simulation;
FIG. 2 is a block diagram of a structure of a feedback control apparatus of a DQPSK transmitter in the related art;
FIG. 3 is a structural diagram of an apparatus for controlling driving amplitude of a DQPSK transmitter in accordance with an embodiment of the present invention;
FIG. 4 is a schematic diagram of a driver feedback control in a direct compensation mode in accordance with an embodiment of the present invention;
FIG. 5 is a schematic diagram of a temperature compensation curve in a direct compensation mode in accordance with an embodiment of the present invention;
FIG. 6 is a schematic diagram of a driver feedback control in an indirect compensation mode in accordance with an embodiment of the present invention;
FIG. 7 is a flow chart of a method for controlling driving amplitude of a DQPSK transmitter in accordance with an embodiment of the present invention.

### Preferred Embodiments of the Present Invention

Since a DQPSK transmitter needs to control three bias points of a modulator, the control circuit is relatively complicated already, then, if the driving amplitude is controlled by using the conventional method in which the pilot signal is added and by the time division multiplexing mode, the control circuit is very large, and at the same time adding the pilot signal might introduce a certain amount of OSNR cost. Therefore, embodiments of the present invention provide a new technique for monitoring and controlling the driving amplitude, to simplify multiple intercoupling control circuits of the DQPSK transmitter, and to get rid of the mode in which the original driving amplitude control needs to use the modulator to feed back, but some signals of the driver itself are only needed to act as the feedback signals to control the driving amplitude. In the following, the specific embodiments of the present invention will be illustrated in combination with the accompanying drawings.

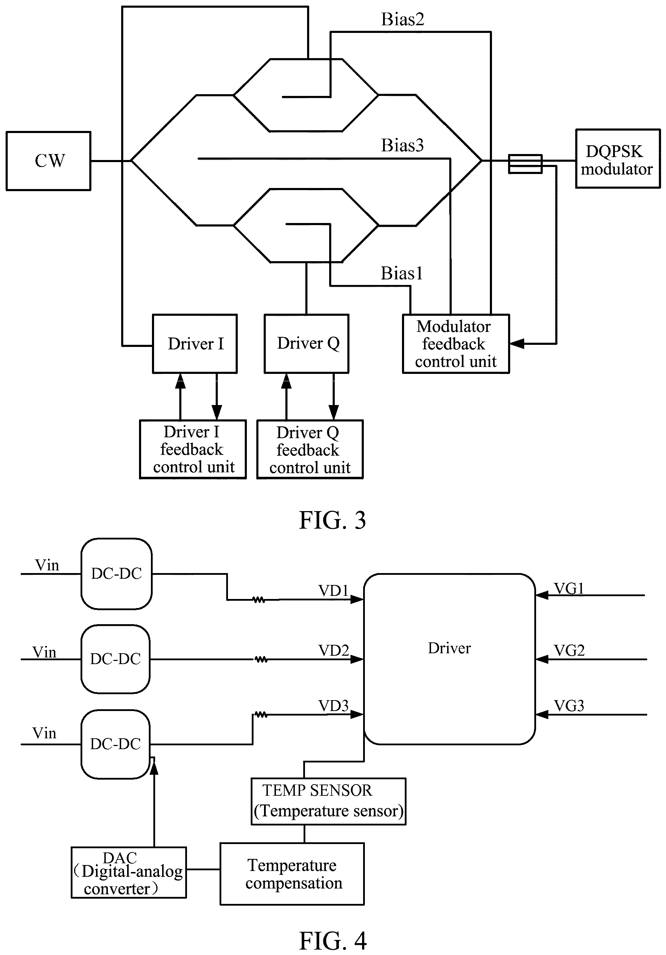

FIG. 3 is a structural diagram of an apparatus for controlling driving amplitude of a DQPSK transmitter. As shown in FIG. 3, the apparatus comprises: the first bias point Bias1, the second bias point Bias2, the third bias point Bias3, the driver I, the driver Q, and the DQPSK modulator which modulates the optical signal emitted from the CW, and the apparatus also comprises:
a modulator feedback control unit, which is connected with the first bias point, the second bias point and the third bias point and is used to control the first bias point, the second bias point and the third bias point according to a part of the optical signal modulated by the DQPSK modulator; wherein, the part of the optical signal is about 10%;
the driver I feedback control unit, which is connected with the driver I and is used to control the driving amplitude of the driver I according to the temperature change of the driver I;
the driver Q feedback control unit, which is connected with the driver Q and is used to control the driving amplitude of the driver Q according to the temperature change of the driver Q.

From the aforementioned scheme, it can be seen that the modulator feedback control unit does not detach a part of the modulated optical signal to control the states of the driver I and the driver Q, the driver amplitude control circuit is separated from the feedback control of the DQPSK modulator, and other feedback signals are used to control the driving amplitude, that is: the driving amplitude of the driver is controlled according to the temperature change of the driver.

In the implementation, considering that the existing high-speed drivers of which the signal bandwidth is up to 30-40GHz almost use a multi-polar FET (field effect transistor) amplifier serial structure, the amplifier gain will change with the change of the temperature, which will lead to the change of the driving amplitude. Therefore, different embodiments of controlling the driving amplitude by using the temperature are provided in the following.

### Embodiment one

FIG. 4 is a schematic diagram of a driver feedback control in a direct compensation mode. In FIG. 4, the driver has three levels, and each level is considered as a MOSFET (Metal Oxide Semiconductor Field Effect Transistor); VD3 is a drain voltage of the third-level MOSFET, VD2 is a drain voltage of the second-level MOSFET, and VD1 is a drain voltage of the first-level MOSFET.

The DC-DC is a switching power supply converter, Vin is an input voltage converted by the DC-DC power supply.

The TEMP SENSOR is a temperature sensor.

The VG is a gate voltage of the MOSFET.

The DAC is a Digital to Analog Converter.

As shown in FIG. 4, in the direct compensation mode, the driving amplitude of this driver is related to the VD3, thus the temperature sensor can be used to detect the temperature of the driver, and then a temperature compensation algorithm is used to change the feedback network of DC-DC, thus changing the value of the VD3, so as to ensure the driving amplitude of the driver unchanged. Specifically, the process is that: the temperature sensor firstly detects the temperature of the driver, and calculates an offset of the VD3 by using the temperature compensation algorithm, then the DAC feeds back the offset to the DC-DC, and then the DC-DC controls the output voltage so as to change the value of the VD3. The driver I and the driver Q can individually use the temperature control circuit to control the driving amplitude. The modulator feedback control unit can use any control mode which will not affect the driver control circuit.

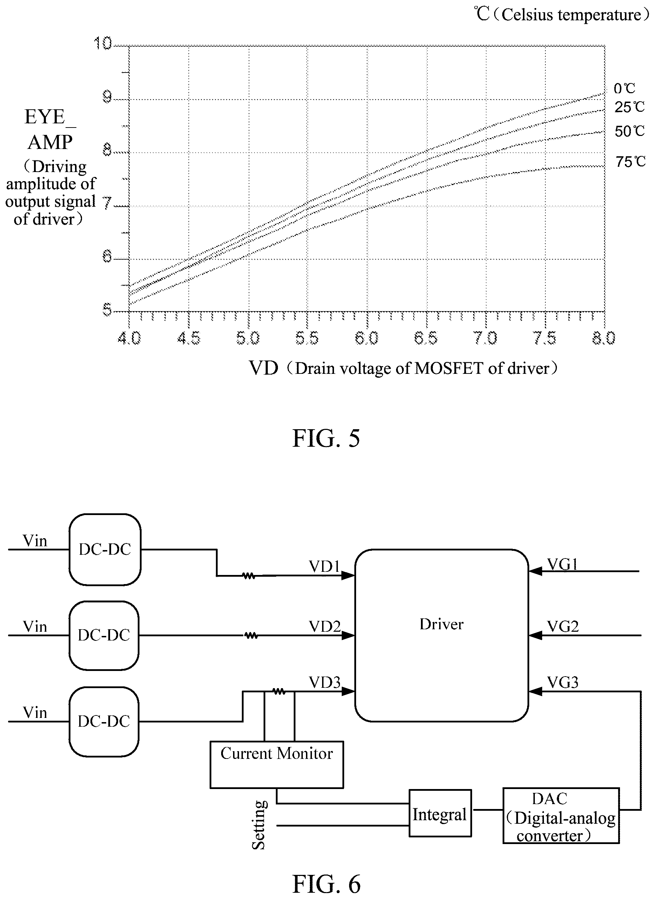

FIG. 5 is a schematic diagram of a temperature compensation curve in a direct compensation mode. In FIG. 5, EYE-AMP is the driving amplitude of the output signal of the driver, C is the Celsius temperature, and VD is the drain voltage of the MOSFET of the driver. As shown in FIG. 5, the temperature compensation curve can be used to change the feedback network of the DC-DC, that is, the temperature compensation curve can be obtained according to the driving amplitude of the output signal of the driver and the drain voltage of the MOSFET of the driver, so as to be used for temperature compensation.

From the aforementioned embodiment, it can be seen that in the specific implementation, the control for the driver I and/or the driver Q can be as follows.

The driver I feedback control unit can comprise:
a first temperature sensor, which is connected with the driver I and is used to detect the temperature change of the driver I;
a first direct compensation module, which is used to compensate in light of the temperature compensation curve and according to the temperature change of the driver I to obtain the offset of the VD3, and then feed back the offset of the VD3 to the switching power supply converter DC-DC, so as to control the change of the drain voltage VD3 of the third-level MOSFET.

The driver Q feedback control unit can comprise:
a second temperature sensor, which is connected with the driver Q and is used to detect the temperature change of the driver Q;
a second direct compensation module, which is used to compensate in light of the temperature compensation curve and according to the temperature change of the driver Q, and then feed back to the switching power supply converter DC-DC, so as to control the change of the drain voltage VD3 of the third-level MOSFET.

### Embodiment two

FIG. 6 is a schematic diagram of a driver feedback control in an indirect compensation mode. In FIG. 6, the driver has three levels, wherein, the VD3 is the drain voltage of the third-level MOSFET, the VD2 is the drain voltage of the second-level MOSFET, and the VD1 is the drain voltage of the first-level MOSFET.

The DC-DC is a switching power supply converter, the Vin is the input voltage converted by the DC-DC power supply.

The Current Monitor is a current monitor.

The VG is the gate voltage of the MOSFET.

The DAC is a Digital to Analog Converter.

As shown in FIG. 6, in the indirect compensation mode, if the driving amplitude of the driver changes due to the influence of the temperature, then the current through the VD3 might change, so that whether the driving amplitude of the driver changes can be indirectly detected by monitoring the current of the VD3. If the current change is monitored, then the current of the VD3 can be corrected by changing the voltage of the VG3, to guarantee the current of the VD3 unchanged, thus the driving amplitude of the driver is controlled. The driver I and the driver Q can individually use the temperature control circuit to control the driving amplitude. The modulator feedback control unit can use any control mode which will not affect the driver control circuit.

From the aforementioned embodiment, in the specific implementation it can be seen that, the control for the driver I and/or the driver Q can be as follows.

The driver I feedback control unit can comprise:
a first current monitoring module, which is connected with the VD3 of the driver I and is used to monitor the current change of the VD3 of the driver I;
a first indirect compensation module, which is used to control the voltage change of the gate voltage VG3 of the third-level MOSFET according to the current change of the VD3 of the driver I, and control the current change of the drain voltage VD3 of the third-level MOSFET by controlling the voltage change of the VG3.

The driver Q feedback control unit can comprise:
a second current monitoring module, which is connected with the VD3 of the driver Q and is used to monitor the current change of the VD3 of the driver Q;
a second indirect compensation module, which is used to control the voltage change of the VG3 according to the current change of the VD3 of the driver Q, and control the current change of the drain voltage VD3 of the third-level MOSFET by controlling the voltage change of the VG3.

In the aforementioned embodiment, the control mode of the direct compensation mode is simple, and the feedback control can be executed as long as the whole temperature range of the compensation curve of the driver is known. The control mode of the indirect compensation mode is relatively complicated, and the feedback control is executed which is required to use the current monitoring mode. However, the control accuracy of the indirect compensation mode is higher than that of the direct compensation mode, and the driving amplitude can be controlled by monitoring the tiny change in current. In the specific implementation, different control modes can be applied according to different application scenarios.

The direct compensation and indirect compensation are taken for example to illustrate in the implementation, but in theory, other modes might be also used, as long as the driving amplitude of the driver can be controlled according to the temperature change of the driver; and the direct compensation and the indirect compensation are only used to teach those skilled in the art how to implement the present invention, which are not intended to user the two modes only, and in the implementation process, an appropriate mode might be determined in combination with the practical requirement.

Based on the same inventive concept, the embodiments of the present invention also provides a method for controlling the driving amplitude of the DQPSK transmitter. Since the principle of this method to solve the problem is similar to the apparatus for controlling the driving amplitude of the DQPSK transmitter, the implementation of this method can refer to the implementation of the apparatus and the repeated places are not repeated here.

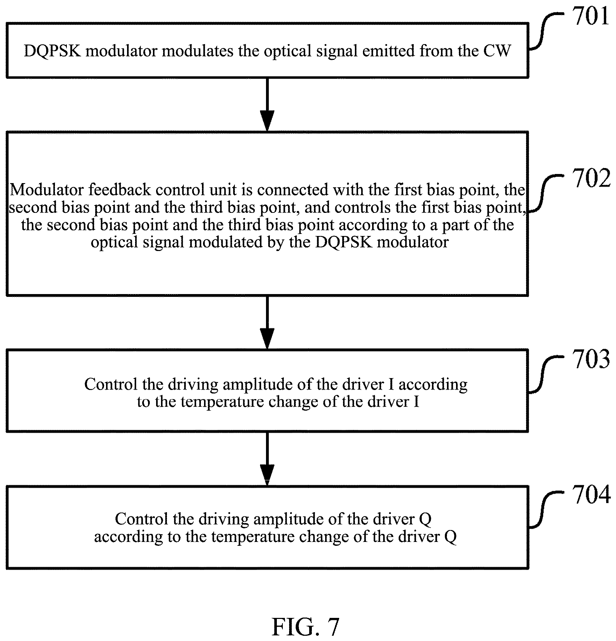

FIG. 7 is a diagram of an implementation process of a method for controlling driving amplitude of a DQPSK transmitter, and as shown in FIG. 7, the following steps can be comprised when controlling the driving amplitude:
in step 701, the DQPSK modulator modulates the optical signal emitted from the CW;
in step 702, the modulator feedback control unit is connected with the first bias point, the second bias point and the third bias point, and controls the first bias point, the second bias point and the third bias point according to a part of the optical signal modulated by the DQPSK modulator;
in step 703, the driving amplitude of the driver I is controlled according to the temperature change of the driver I;
in step 704, the driving amplitude of the driver Q is controlled according to the temperature change of the driver Q.

In the implementation, there is no necessary timing requirement among steps 702, 703, 704.

In the implementation, controlling the driving amplitude of the driver I according to the temperature change of the driver I can comprise:
detecting the temperature change of the driver I;
compensating in light of the temperature compensation curve and according to the temperature change of the driver I, and then feeding back to the switching power supply converter DC-DC, so as to control the change of the drain voltage VD3 of the third-level MOSFET.

In the implementation, controlling the driving amplitude of the driver Q according to the temperature change of the driver Q can comprise:
detecting the temperature change of the driver Q;
compensating in light of the temperature compensation curve and according to the temperature change of the driver Q, and then feeding back to the switching power supply converter DC-DC, so as to control the change of the drain voltage VD3 of the third-level MOSFET.

In the implementation, the temperature compensation curve can be obtained according to the driving amplitude of the output signal of the driver and the drain voltage of the MOSFET of the driver.

In the implementation, controlling the driving amplitude of the driver I according to the temperature change of the driver I can comprise:
monitoring the current change of the VD3 of the driver I;
controlling the voltage change of the gate voltage VG3 of the third-level MOSFET according to the current change of the VD3 of the driver I, and controlling the current change of the drain voltage VD3 of the third-level MOSFET by controlling the voltage change of the VG3.

In the implementation, controlling the driving amplitude of the driver Q according to the temperature change of the driver Q can comprise:
monitoring the current change of the VD3 of the driver Q;
controlling the voltage change of the VG3 according to the current change of the VD3 of the driver Q, and controlling the current change of the drain voltage VD3 of the third-level MOSFET by controlling the voltage change of the VG3.

From the aforementioned embodiment, it can be seen that, in the technical solution provided in the embodiments of the present invention, since the modulator feedback control unit is used to control the voltages of the three bias points of the DQPSK modulator, the driver feedback control unit is used to individually control the driving amplitude of the driver. Compared with the related art, the present invention can simplify the complexity of the control circuit of the DQPSK transmitter. Moreover, the present invention does not need to add the pilot signal on the driving amplitude of the driver, thus no extra OSNR cost would be created.

Although the preferred embodiments of the present invention are described, once those skilled in the art acquire the basic creative concept, they can make additional changes and modifications on these embodiments. Therefore, the appended claims intend to include the preferred embodiments as well as all changes and modifications that fall into the scope of the present invention.

Obviously, those skilled in the art can make various modifications and variations on the present invention, without departing from the scope of the present invention. Thus, if these modifications and variations of the present invention fall into the scope of the claims of the present invention and its equivalent technologies, then the present invention also intends to include these modifications and variations into.

## Claims

1. An apparatus for controlling driving amplitude of a differential quadrature phase shift keying, DQPSK, transmitter, **characterized by** comprising: a first bias point, a second bias point, a third bias point, a driver I, a driver Q, and a DQPSK modulator for modulating an optical signal emitted by a continuous wave light source, CW, of an unmodulated signal, wherein, the apparatus further comprises:
a modulator feedback control unit, a driver I feedback control unit and a driver Q feedback control unit; wherein,
the modulator feedback control unit is connected with the first bias point, the second bias point and the third bias point, and is configured to control the voltages of the first bias point, the voltages of the second bias point and the voltages of the third bias point according to a part of the optical signal modulated by the DQPSK modulator;
the driver I feedback control unit is connected with the driver I and is configured to control the driving amplitude of the driver I according to temperature change of the driver I; and
the driver Q feedback control unit is connected with the driver Q and is configured to control the driving amplitude of the driver Q according to temperature change of the driver Q.

2. The apparatus of claim 1, wherein, the driver I feedback control unit comprises a first temperature sensor and a first direct compensation module; wherein,
the first temperature sensor is connected with the driver I and is configured to detect the temperature change of the driver I; and
the first direct compensation module is configured to compensate in light of a temperature compensation curve and according to the temperature change of the driver I, and after obtaining an offset of a drain voltage of a third-level metal oxide semiconductor field effect transistor, MOSFET, of the driver I, feed back the offset to a switching power supply converter connected with the driver I, so as to control change of the drain voltage of the third-level MOSFET of the driver I.

3. The apparatus of claim 1, wherein, the driver Q feedback control unit comprises a second temperature sensor and a second direct compensation module; wherein,
the second temperature sensor is connected with the driver Q and is configured to detect the temperature change of the driver Q; and
the second direct compensation module is configured to compensate in light of a temperature compensation curve and according to the temperature change of the driver Q, and after obtaining an offset of a drain voltage of a third-level MOSFET of the driver Q, feed back the offset to a switching power supply converter connected with the driver Q, so as to control change of the drain voltage of the third-level MOSFET of the driver Q.

4. The apparatus of claim 2 or 3, wherein, the temperature compensation curve is obtained according to the driving amplitude of an output signal of the driver and the drain voltage of the MOSFET of the driver.

5. The apparatus of claim 1, wherein, the driver I feedback control unit comprises a first current monitoring module and a first indirect compensation module; wherein,
the first current monitoring module is connected with a drain voltage of a third-level MOSFET of the driver I and is configured to monitor current change of the drain voltage of the third-level MOSFET of the driver I; and
the first indirect compensation module is configured to control voltage change of a gate voltage of the third-level MOSFET according to the current change of the drain voltage of the third-level MOSFET of the driver I, and control the current change of the drain voltage of the third-level MOSFET by controlling the voltage change of the gate voltage of the third-level MOSFET.

6. The apparatus of claim 1, wherein, the driver Q feedback control unit comprises a second current monitoring module and a second indirect compensation module; wherein,
the second current monitoring module is connected with a drain voltage of a third-level MOSFET of the driver Q and is configured to monitor current change of the drain voltage of the third-level MOSFET of the driver Q; and
the second indirect compensation module is configured to control voltage change of a gate voltage of the third-level MOSFET according to the current change of the drain voltage of the third-level MOSFET of the driver Q, and control the current change of the drain voltage of the third-level MOSFET by controlling the voltage change of the gate voltage of the third-level MOSFET.

7. A method for controlling driving amplitude of a differential quadrature phase shift keying, DQPSK, transmitter, **characterized by** comprising:
Modulating (701), by a DQPSK modulator, an optical signal emitted from a CW;
connecting a modulator feedback control unit with a first bias point, a second bias point and a third bias point of said DQPSK modulator, and controlling, by the modulator feedback control unit, the voltages of the first bias point, the voltages of the second bias point and the voltages of the third bias point according to a part of the optical signal modulated by the DQPSK modulator (702);
controlling the driving amplitude of a driver I according to temperature change of the driver I (703);
controlling the driving amplitude of a driver Q according to temperature change of the driver Q (704).

8. The method of claim 7, wherein, controlling the driving amplitude of the driver I according to the temperature change of the driver I comprises:
detecting the temperature change of the driver I;
compensating in light of a temperature compensation curve and according to the temperature change of the driver I, and after obtaining an offset of a drain voltage of a third-level metal oxide semiconductor field effect transistor, MOSFET, of the driver I, feeding back the offset to a switching power supply converter connected with the driver I, so as to control change of the drain voltage of the third-level MOSFET of the driver I;
and/or,
controlling the driving amplitude of the driver Q according to the temperature change of the driver Q comprises:
detecting the temperature change of the driver Q;
compensating in light of a temperature compensation curve and according to the temperature change of the driver Q, and after obtaining an offset of a drain voltage of a third-level MOSFET of the driver Q, feeding back the offset to a switching power supply converter connected with the driver Q, so as to control change of the drain voltage of the third-level MOSFET of the driver Q.

9. The method of claim 8, wherein, the temperature compensation curve is obtained according to the driving amplitude of an output signal of the driver and the drain voltage of the MOSFET of the driver.

10. The method of claim 7, wherein, controlling the driving amplitude of the driver I according to the temperature change of the driver I comprises:
monitoring current change of a drain voltage of a third-level MOSFET of the driver I;
controlling voltage change of a gate voltage of the third-level MOSFET according to the current change of the drain voltage of the third-level MOSFET of the driver I, and controlling the current change of the drain voltage of the third-level MOSFET by controlling the voltage change of the gate voltage of the third-level MOSFET;
and/or,
controlling the driving amplitude of the driver Q according to the temperature change of the driver Q comprises:
monitoring current change of a drain voltage of a third-level MOSFET of the driver Q;
controlling voltage change of a gate voltage of the third-level MOSFET according to the current change of the drain voltage of the third-level MOSFET of the driver Q, and controlling the current change of the drain voltage of the third-level MOSFET by controlling the voltage change of the gate voltage of the third-level MOSFET.

## Patentansprüche

1. Vorrichtung zur Steuerung der Antriebsamplitude eines Differenzialquadratur-Phaseumtastungs-(DQPSK)-Senders, **dadurch gekennzeichnet, dass** sie Folgendes umfasst: einen ersten Vorspannungspunkt, einen zweiten Vorspannungspunkt, einen dritten Vorspannungspunkt, einen Treiber I, einen Treiber Q und einen DQPSK-Modulator zum Modulieren eines von einer kontinuierlichen Lichtwellenquelle, CW, abgegebenen optischen Signals eines unmodulierten Signals, wobei die Vorrichtung ferner umfasst: eine Modulator-Rückkopplungssteuereinheit, eine Treiber I-Rückkopplungssteuereinheit und eine Treiber Q-Rückkopplungssteuereinheit; wobei
die Modulator-Rückkopplungssteuereinheit mit dem ersten Vorspannungspunkt, dem zweiten Vorspannungspunkt und dem dritten Vorspannungspunkt verbunden und konfiguriert ist, die Spannungen des ersten Vorspannungspunkts, die Spannungen des zweiten Vorspannungspunkts und die Spannungen des dritten Vorspannungspunkts entsprechend einem Teil des vom DQPSK-Modulators modulierten optischen Signals zu steuern; die Treiber I-Rückkopplungssteuereinheit mit dem Treiber I verbunden und konfiguriert ist, die Antriebsamplitude des Treibers I entsprechend einer Temperaturänderung des Treibers I zu steuern; und die Treiber Q-Rückkopplungssteuereinheit mit dem Treiber Q verbunden und konfiguriert ist, die Antriebsamplitude des Treibers Q entsprechend einer Temperaturänderung des Treibers Q zu steuern.

2. Vorrichtung nach Anspruch 1, wobei die Treiber I-Rückkopplungssteuereinheit einen ersten Temperatursensor und ein erstes direktes Kompensationsmodul umfasst; wobei
der erste Temperatursensor mit dem Treiber I verbunden und konfiguriert ist, die Temperaturänderung des Treibers I zu detektieren; und das erste direkte Kompensationsmodul konfiguriert ist, angesichts einer Temperaturkompensationskurve und entsprechend der Temperaturänderung des Treibers I zu kompensieren und nach Erhalten eines Offsets einer Drain-Spannung eines Metalloxid-Halbleiterfeldeffekttransistors der dritten Ebene, MOSFET, des Treibers I, den Offset an einen mit dem Treiber I verbundenen Schaltleistungsversorgungskonverter rückzukoppeln, um die Änderung der Drain-Spannung des MOSFET der dritten Ebene des Treibers I zu steuern.

3. Vorrichtung nach Anspruch 1, wobei die Treiber Q-Rückkopplungssteuereinheit einen zweiten Temperatursensor und ein zweites direktes Kompensationsmodul umfasst; wobei
der zweite Temperatursensor mit dem Treiber Q verbunden und konfiguriert ist, um die Temperaturänderung des Treibers Q zu detektieren; und
das zweite direkte Kompensationsmodul konfiguriert ist, angesichts einer Temperaturkompensationskurve und entsprechend der Temperaturänderung des Treibers Q zu kompensieren und nach Erhalten eines Offsets einer Drain-Spannung eines Metalloxid-Halbleiterfeldeffekttransistors der dritten Ebene, MOSFET, des Treibers Q, den Offset an einen mit dem Treiber Q verbundenen Schaltleistungsversorgungskonverter rückzukoppeln, um die Änderung der Drain-Spannung des MOSFET der dritten Ebene des Treibers Q zu steuern.

4. Vorrichtung nach Anspruch 2 oder 3, wobei die Temperaturkompensationskurve entsprechend der Antriebsamplitude eines Ausgangssignals des Treibers und der Drain-Spannung des MOSFET des Treibers erhalten wird.

5. Vorrichtung nach Anspruch 1, wobei die Treiber I-Rückkopplungssteuereinheit ein erstes Stromüberwachungsmodul und ein erstes indirektes Kompensationsmodul umfasst; wobei
das erste Stromüberwachungsmodul mit einer Drain-Spannung eines MOSFET der dritten Ebene des Treibers I verbunden und konfiguriert ist, um die Stromänderung der Drain-Spannung des MOSFET der dritten Ebene des Treibers I zu überwachen; und das erste indirekte Kompensationsmodul konfiguriert ist, um die Spannungsänderung einer Gate-Spannung des MOSFET der dritten Ebene entsprechend der Stromänderung der Drain-Spannung des MOSFET der dritten Ebene des Treibers I zu steuern und die Stromänderung der Drain-Spannung des MOSFET der dritten Ebene durch Steuern der Spannungsänderung der Gate-Spannung des MOSFET der dritten Ebene zu steuern.

6. Vorrichtung nach Anspruch 1, wobei die Treiber Q-Rückkopplungssteuereinheit ein zweites Stromüberwachungsmodul und ein zweites indirektes Kompensationsmodul umfasst; wobei
das zweite Stromüberwachungsmodul mit einer Drain-Spannung eines MOSFET der dritten Ebene des Treibers Q verbunden und konfiguriert ist, um die Stromänderung der Drain-Spannung des MOSFET der dritten Ebene des Treibers Q zu überwachen; und das zweite indirekte Kompensationsmodul konfiguriert ist, um die Spannungsänderung einer Gate-Spannung des MOSFET der dritten Ebene entsprechend der Stromänderung der Drain-Spannung des MOSFET der dritten Ebene des Treibers Q zu steuern und die Stromänderung der Drain-Spannung des MOSFET der dritten Ebene durch Steuern der Spannungsänderung der Gate-Spannung des MOSFET der dritten Ebene zu steuern.

7. Verfahren zum Steuern der Antriebsamplitude eines Differenzialquadratur-Phaseumtastungs-(DQPSK)-Senders, **dadurch gekennzeichnet, dass** es umfasst:
Modulieren (701) durch einen DQPSK-Modulator eines von einer CW ausgegebenen optischen Signals;
Verbinden einer Modulator-Rückkopplungssteuereinheit mit einem ersten Vorspannungspunkt, einem zweiten Vorspannungspunkt und einem dritten Vorspannungspunkt des DQPSK-Modulators und Steuern, durch die Modulator-Rückkopplungssteuereinheit, der Spannungen des ersten Vorspannungspunkts, der Spannungen des zweiten Vorspannungspunkts und der Spannungen des dritten Vorspannungspunkts entsprechend einem Teil des vom DQPSK-Modulator modulierten optischen Signals (702);
Steuern der Antriebsamplitude eines Treibers I entsprechend der Temperaturänderung des Treibers I (703);
Steuern der Antriebsamplitude eines Treibers Q entsprechend der Temperaturänderung des Treibers Q (704).

8. Verfahren nach Anspruch 7, wobei das Steuern der Antriebsamplitude des Treibers I entsprechend der Temperaturänderung des Treibers I umfasst:
Detektieren der Temperaturänderung des Treibers I;
Kompensieren angesichts einer Temperaturkompensationskurve und entsprechend der Temperaturänderung des Treibers I und nach Erhalten eines Offsets einer Drain-Spannung eines Metalloxid-Halbleiterfeldeffekttransistors der dritten Ebene, MOSFET, des Treibers I, Rückkoppeln des Offsets an einen mit dem Treiber I verbundenen Schaltleistungsversorgungskonverter, um die Änderung der Drain-Spannung des MOSFET der dritten Ebene des Treibers I zu steuern;
und/oder
wobei das Steuern der Antriebsamplitude des Treibers Q entsprechend der Temperaturänderung des Treibers Q umfasst:
Detektieren der Temperaturänderung des Treibers Q;
Kompensieren angesichts einer Temperaturkompensationskurve und entsprechend der Temperaturänderung des Treibers Q und nach Erhalten eines Offsets einer Drain-Spannung eines MOSFETs der dritten Ebene des Treibers Q, Rückkoppeln des Offsets an einen mit dem Treiber Q verbundenen Schaltleistungsversorgungskonverter, um die Änderung der Drain-Spannung des MOSFET der dritten Ebene des Treibers Q zu steuern.

9. Verfahren nach Anspruch 8, wobei die Temperaturkompensationskurve entsprechend der Antriebsamplitude eines Ausgangssignals des Treibers und der Drain-Spannung des MOSFET des Treibers erhalten wird.

10. Verfahren nach Anspruch 7, wobei das Steuern der Antriebsamplitude eines Treibers I entsprechend der Temperaturänderung des Treibers I umfasst:
Überwachen der Stromänderung einer Drain-Spannung eines MOSFET der dritten Ebene des Treibers I;
Steuern der Spannungsänderung einer Gate-Spannung des MOSFET der dritten Ebene entsprechend der Stromänderung der Drain-Spannung des MOSFET der dritten Ebene des Treibers I und Steuern der Stromänderung der Drain-Spannung des MOSFET der dritten Ebene durch Steuern der Spannungsänderung der Gate-Spannung des MOSFET der dritten Ebene;
und/oder
wobei das Steuern der Antriebsamplitude des Treibers Q entsprechend der Temperaturänderung des Treibers Q umfasst:
Überwachen der Stromänderung einer Drain-Spannung eines MOSFET der dritten Ebene des Treibers Q;
Steuern der Spannungsänderung einer Gate-Spannung des MOSFET der dritten Ebene entsprechend der Stromänderung der Drain-Spannung des MOSFET der dritten Ebene des Treibers Q und Steuern der Stromänderung der Drain-Spannung des MOSFET der dritten Ebene durch Steuern der Spannungsänderung der Gate-Spannung des MOSFET der dritten Ebene.

## Revendications

1. Appareil de pilotage de l'amplitude de commande d'un émetteur-récepteur à modulation différentielle en quadrature par changement de phase, DQPSK, **caractérisé en ce qu'**il comprend :
un premier point de polarisation, un deuxième point de polarisation, un troisième point de polarisation, un circuit de commande I, un circuit de commande Q, et un modulateur DQPSK destiné à moduler un signal optique émis par une source de lumière à onde entretenue, CW, d'un signal non-modulé, dans lequel, l'appareil comprend en outre : une unité de pilotage de contre-réaction du modulateur, une unité de pilotage de contre-réaction du circuit de commande I et une unité de pilotage de contre-réaction du circuit de commande Q ; dans lequel,
l'unité de pilotage de contre-réaction du modulateur est connectée au premier point de polarisation, au deuxième point de polarisation et au troisième point de polarisation, et est configurée pour piloter les tensions du premier point de polarisation, les tensions du deuxième point de polarisation et les tensions du troisième point de polarisation en fonction d'une partie du signal optique modulé par le modulateur DQPSK ;
l'unité de pilotage de contre-réaction du circuit de commande I est connectée au circuit de commande I et est configurée pour piloter l'amplitude de commande du circuit de commande I en fonction d'un changement de température du circuit de commande I ; et
l'unité de pilotage de contre-réaction du circuit de commande Q est connectée au circuit de commande Q et est configurée pour piloter l'amplitude de commande du circuit de commande Q en fonction d'un changement de température du circuit de commande Q.

2. Appareil selon la revendication 1, dans lequel l'unité de pilotage par contre-réaction du circuit de commande I comprend un premier capteur de température et un premier module de compensation directe ; dans lequel,
le premier capteur de température est connecté au circuit de commande I et est configuré pour détecter le changement de température du circuit de commande I ; et
le premier module de compensation directe est configuré pour compenser à la lumière d'une courbe de compensation de température et en fonction du changement de température du circuit de commande I, et après l'obtention d'un décalage d'une tension de drain d'un transistor à effet de champ à semi-conducteur à oxyde de métal, MOSFET, de troisième niveau du circuit de commande I, transférer en contre-réaction le décalage à un convertisseur d'alimentation de commutation connecté au circuit de commande I, de manière à piloter un changement de la tension de drain du MOSFET de troisième niveau du circuit de commande I.

3. Appareil selon la revendication 1, dans lequel l'unité de pilotage par contre-réaction du circuit de commande Q comprend un deuxième capteur de température et un deuxième module de compensation directe ; dans lequel,
le deuxième capteur de température est connecté au circuit de commande Q et est configuré pour détecter le changement de température du circuit de commande Q ; et
le deuxième module de compensation directe est configuré pour compenser à la lumière d'une courbe de compensation de température et en fonction du changement de température du circuit de commande Q, et après l'obtention d'un décalage d'une tension de drain d'un transistor MOSFET de troisième niveau du circuit de commande Q, transférer en contre-réaction le décalage à un convertisseur d'alimentation de commutation connecté au circuit de commande Q, de manière à piloter un changement de la tension de drain du MOSFET de troisième niveau du circuit de commande Q.

4. Appareil selon la revendication 2 ou 3, dans lequel, la courbe de compensation de température est obtenue en fonction de l'amplitude de commande d'un signal de sortie du circuit de commande et de la tension de drain du MOSFET du circuit de commande.

5. Appareil selon la revendication 1, dans lequel l'unité de pilotage par contre-réaction du circuit de commande I comprend un premier module de surveillance de courant et un premier module de compensation indirecte ; dans lequel,
le premier module de surveillance de courant est connecté à une tension de drain d'un transistor MOSFET de troisième niveau du circuit de commande I et est configuré pour surveiller un changement de courant de la tension de drain du transistor MOSFET de troisième niveau du circuit de commande I ; et le premier module de compensation indirecte est configuré pour piloter un changement de tension d'une tension de grille du transistor MOSFET de troisième niveau en fonction du changement de courant de la tension de drain du transistor MOSFET de troisième niveau du circuit de commande I, et piloter le changement de courant de la tension de drain du transistor MOSFET de troisième niveau en pilotant le changement de tension de la tension de grille du transistor MOSFET de troisième niveau.

6. Appareil selon la revendication 1, dans lequel l'unité de pilotage par contre-réaction du circuit de commande Q comprend un deuxième module de surveillance de courant et un deuxième module de compensation indirecte ; dans lequel,
le deuxième module de surveillance de courant est connecté à une tension de drain d'un transistor MOSFET de troisième niveau du circuit de commande Q et est configuré pour surveiller un changement de courant de la tension de drain du transistor MOSFET de troisième niveau du circuit de commande Q ; et le deuxième module de compensation indirecte est configuré pour piloter un changement de tension d'une tension de grille du transistor MOSFET de troisième niveau en fonction du changement de courant de la tension de drain du transistor MOSFET de troisième niveau du circuit de commande Q, et piloter le changement de courant de la tension de drain du transistor MOSFET de troisième niveau en pilotant le changement de tension de la tension de grille du transistor MOSFET de troisième niveau.

7. Procédé de pilotage de l'amplitude de commande d'un émetteur-récepteur à modulation différentielle en quadrature par changement de phase, DQPSK, **caractérisé en ce qu'**il comprend :
la modulation (701), par un modulateur DQPSK, d'un signal optique émis par une source de lumière à onde entretenue, CW ;
la connexion d'une unité de pilotage de contre-réaction de modulateur à un premier point de polarisation, un deuxième point de polarisation et un troisième point de polarisation dudit modulateur DQPSK, et le pilotage, par l'unité de pilotage de contre-réaction de modulateur, des tensions du premier point de polarisation, des tensions du deuxième point de polarisation et des tensions du troisième point de polarisation en fonction d'une partie du signal optique modulé par le modulateur DQPSK (702) ;
le pilotage de l'amplitude de commande du circuit de commande I en fonction d'un changement de température du circuit de commande I (703) ;
le pilotage de l'amplitude de commande du circuit de commande Q en fonction d'un changement de température du circuit de commande Q (704).

8. Procédé selon la revendication 7, dans lequel, le pilotage de l'amplitude de commande du circuit de commande I en fonction du changement de température du circuit de commande I comprend :
la détection du changement de température du circuit de commande I ;
la compensation à la lumière d'une courbe de compensation de température et en fonction du changement de température du circuit de commande I, et après l'obtention d'un décalage d'une tension de drain d'un transistor à effet de champ à semi-conducteur à oxyde de métal, MOSFET, de troisième niveau du circuit de commande I, le transfert en contre-réaction du décalage à un convertisseur d'alimentation de commutation connecté au circuit de commande I, de manière à piloter le changement de la tension de drain du MOSFET de troisième niveau du circuit de commande I ;
et/ou,
le pilotage de l'amplitude de commande du circuit de commande Q en fonction du changement de température du circuit de commande Q comprend :
la détection du changement de température du circuit de commande Q ;
la compensation à la lumière d'une courbe de compensation de température et en fonction du changement de température du circuit de commande Q, et après l'obtention d'un décalage d'une tension de drain d'un transistor MOSFET de troisième niveau du circuit de commande Q, le transfert en contre-réaction du décalage à un convertisseur d'alimentation de commutation connecté au circuit de commande Q, de manière à piloter le changement de la tension de drain du MOSFET de troisième niveau du circuit de commande Q.

9. Procédé selon la revendication 8, dans lequel, la courbe de compensation de température est obtenue en fonction de l'amplitude de commande d'un signal de sortie du circuit de commande et de la tension de drain du MOSFET du circuit de commande.

10. Procédé selon la revendication 7, dans lequel, le pilotage de l'amplitude de commande du circuit de commande I en fonction du changement de température du circuit de commande I comprend :
la surveillance d'un changement de courant d'une tension de drain d'un transistor MOSFET de troisième niveau du circuit de commande I ;
le pilotage d'un changement de tension d'une tension de grille du transistor MOSFET de troisième niveau en fonction du changement de courant de la tension de grille du transistor MOSFET de troisième niveau du circuit de commande I ; et le pilotage du changement de courant de la tension de drain du transistor MOSFET de troisième niveau en pilotant le changement de tension du transistor MOSFET de troisième niveau ;
et/ou,
le pilotage de l'amplitude de commande du circuit de commande Q en fonction du changement de température du circuit de commande Q comprend :
la surveillance d'un changement de courant d'une tension de drain d'un transistor MOSFET de troisième niveau du circuit de commande Q ;
le pilotage d'un changement de tension d'une tension de grille du transistor MOSFET de troisième niveau en fonction du changement de courant de la tension de grille du transistor MOSFET de troisième niveau du circuit de commande Q ; et le pilotage du changement de courant de la tension de drain du transistor MOSFET de troisième niveau en pilotant le changement de tension du transistor MOSFET de troisième niveau.
